# EUROPÄISCHE PATENTSCHRIFT

(11) **EP 2 861 948 B1**
(45) Veröffentlichungstag und Bekanntmachung des Hinweises auf die Patenterteilung: **23.08.2017**
(21) Anmeldenummer: 13730168.5
(22) Anmeldetag: 12.06.2013
(51) Int. Cl.: G01L 3/10, G01D 5/14

(54) **SENSOREINRICHTUNG ZUM MESSEN EINER EINEN ROTATIONSZUSTAND EINES WELLENTEILS EINES KRAFTFAHRZEUGS CHARAKTERISIERENDEN GRÖßE, KRAFTFAHRZEUG UND VERFAHREN ZUM HERSTELLEN EINER SENSOREINRICHTUNG**
SENSOR DEVICE FOR MEASURING A VARIABLE CHARACTERISING A ROTATIONAL STATE OF A SHAFT PART OF A MOTOR VEHICLE, MOTOR VEHICLE AND METHOD FOR PRODUCING A SENSOR DEVICE
DISPOSITIF DE DÉTECTION PERMETTANT DE MESURER UNE GRANDEUR CARACTÉRISTIQUE D'UN ÉTAT DE ROTATION D'UN ÉLÉMENT ARBRE D'UN VÉHICULE AUTOMOBILE, VÉHICULE AUTOMOBILE ET PROCÉDÉ DE FABRICATION D'UN DISPOSITIF DE DÉTECTION

(30) Priorität: 13.06.2012 DE 102012011876
(43) Veröffentlichungstag der Anmeldung: 22.04.2015
(73) Patentinhaber: Valeo Schalter und Sensoren GmbH, 74321 Bietigheim-Bissingen (DE)
(72) Erfinder: SCHOEPE, Roman, 75433 Maulbronn (DE); FROEHLICH, Ekkehart, 74226 Nordheim (DE)
(86) Internationale Anmeldenummer: PCT/EP2013/062134
(87) Internationale Veröffentlichungsnummer: WO 2013/186254

(56) Entgegenhaltungen:
- EP-A2- 2 433 848
- WO-A2-2009/035266

## Beschreibung

Die Erfindung betrifft eine Sensoreinrichtung zum Messen einer einen Rotationszustand eines Wellenteils eines Kraftfahrzeugs, insbesondere einer Lenkwelle des Kraftfahrzeugs, charakterisierenden Größe, etwa eines Drehmoments und/oder eines Lenkwinkels. Die Sensoreinrichtung weist einen Halter auf, der mit dem zugeordneten und korrespondierenden Wellenteil des Kraftfahrzeugs verbunden werden kann. Die Sensoreinrichtung hat auch ein an dem Halter angeordnetes, aus einem magnetischen - insbesondere weichmagnetischen - Material gebildetes Statorteil, welches zum Leiten von magnetischem Fluss von einem Magneten hin zu einem Magnetsensor ausgebildet ist. Das Statorteil weist ein sich in radialer Richtung erstreckendes, ringförmiges und flanschartiges Basiselement auf, wie auch eine Vielzahl von in axialer Richtung von dem ringförmigen Basiselement abstehenden, in Umfangsrichtung verteilt angeordneten Zahnelementen. Die Erfindung betrifft außerdem ein Kraftfahrzeug sowie ein Verfahren zum Herstellen einer Sensoreinrichtung.

Vorliegend gilt das Interesse insbesondere einer Sensoreinrichtung, mittels welcher der Lenkwinkel - und dann auch ein Drehmoment - einer Lenkwelle eines Kraftfahrzeugs gemessen werden kann. Solche Sensoreinrichtungen sind bereits aus dem Stand der Technik bekannt und werden üblicherweise bei elektrischen Lenksystemen eingesetzt. So beschreibt beispielsweise die Druckschrift DE 102 40 049 A1 eine derartige Sensoranordnung, welche zur Erfassung des an einer Lenkwelle eines Kraftfahrzeugs anstehenden Drehmoments ausgebildet ist. Die Sensoreinrichtung ist dabei an zwei sich in axialer Richtung gegenüberliegenden Teilwellen der Lenkwelle angebracht. Auf der ersten Teilwelle ist ein Magnet - etwa ein Ringmagnet - vorhanden, während auf der anderen Teilwelle ein Magnetfeldsensor - beispielsweise ein Hall-Sensor - angebracht ist, welcher dem Dauermagneten in radialer Richtung über einen Zwischenraum bzw. einen Luftspalt gegenüberliegt.

Eine solche Sensoreinrichtung umfasst also üblicherweise zwei Sensorteile bzw. Einheiten, nämlich einen Ringmagneten einerseits sowie einen Magnetsensor andererseits, welcher zum Erfassen des Magnetfeldes des Dauermagneten dient. Während der Dauermagnet an einem ersten Wellenteil der Lenkung angebracht ist, ist der Magnetsensor in der Regel an einem zweiten Wellenteil angeordnet, welches über einen Torsionsstab mit dem ersten Wellenteil verbunden ist. Die Sensoreinrichtung erfasst hier die relative Bewegung des ersten Wellenteils bezüglich des zweiten Wellenteils.

Eine Sensoreinrichtung der eingangs genannten Gattung ist außerdem aus der Druckschrift DE 10 2007 043 502 A1 bekannt. In diesem Dokument ist ein Flussleiterelement beschrieben, welches zum Leiten des magnetischen Flusses von dem Statorteil hin zu einem Hall-Sensor dient.

Die Erfindung geht insbesondere von einer Sensoreinrichtung aus, wie sie im Dokument WO 2009/035266 A2 beschrieben ist. Wie bereits ausgeführt, besteht eine derartige Sensoreinrichtung üblicherweise aus zwei Sensoreinheiten, die relativ zueinander gedreht werden können, nämlich aus dem Ringmagneten einerseits sowie dem Magnetsensor zur Erfassung des magnetischen Feldes andererseits. Der Magnetsensor beinhaltet wiederum -wie insbesondere in den Fig. 2 und 3 der letztgenannten Druckschrift dargestellt ist - einen aus Kunststoff ausgebildeten Halter sowie einen am Halter drehfest angebrachten Stator. Dieser Stator besteht aus zwei magnetischen Statorteilen, welche jeweils eine Vielzahl von sich in axialer Richtung erstreckenden magnetischen Zähnen aufweisen, die von einem ringförmigen (kreisringförmigen), in radialer Richtung verlaufenden, flanschartigen Basiselement abstehen. Die beiden magnetischen Statorteile bilden also insgesamt den Stator und dienen zum Empfangen des magnetischen Flusses des Ringmagneten sowie zum Übertragen des magnetischen Flusses hin zu dem genannten Flussleiter und hierdurch weiter zum Hall-Sensor. Der Stator und der Ringmagnet sind jeweils an den mittels eines Torsionsstabs verbundenen Teilwellen fest angebracht und können sich somit gemeinsam mit der Welle drehen.

Nun richtet sich das Interesse auf die Befestigung des Statorteils an dem genannten Halter. Im Gegenstand gemäß Dokument WO 2009/035266 A2 sind in dem magnetischen Statorteil eine Vielzahl von Aussparungen jeweils in Form einer Durchgangsbohrung ausgebildet. Diese Aussparungen sind dabei an dem radialen, kreisringförmigen Basiselement des magnetischen Statorteils ausgebildet. In die Aussparungen können korrespondierende Zapfen bzw. Bolzen des Halters aufgenommen werden, um das Statorteil an dem Halter zu befestigen. Als nachteilig an diesem Stand der Technik ist einerseits der Umstand anzusehen, dass diese Aussparungen bzw. die Zapfen die Übertragung des magnetischen Flusses von dem magnetischen Statorteil hin zu dem Flussleiter und dann zum Hall-Sensor deutlich beeinträchtigen. Der Flussleiter muss nämlich in einem möglichst kleinen Abstand zu der axialen Stirnseite bzw. der Stirnfläche des ringförmigen Basiselements des Statorteils angeordnet sein, damit eine zuverlässige Übertragung des magnetischen Flusses gewährleistet werden kann. Dies ist aber aufgrund der Befestigungselemente nicht möglich. Andererseits ist an diesem Stand der Technik auch nachteilig, dass die Befestigung des Statorteils an dem Halter bzw. der Verbindungsprozess alleine aufgrund des Schweißverfahrens relativ aufwändig ist.

Aus dem Stand der Technik ist auch eine weitere Befestigungsart des Statorteils an dem Halter bekannt, bei welcher das Statorteil (nämlich insgesamt zwei solche Teile) auf den Halter aufgesteckt wird und anschließend ein so genannter Haltering auf einen hervorstehenden Zapfen des Halters gesteckt und mit dem Halter mithilfe eines Lasers verschweißt wird. Auch diese Befestigungsart ist relativ aufwändig, weil einerseits zusätzliche Bauteile - nämlich die Halteringe - benötigt werden und außerdem der Laserschweißprozess alleine relativ anspruchsvoll und aufwändig ist.

Des Weiteren ist auch aus der EP 2 433 848 A2 eine Sensoreinrichtung zum Messen eines Drehmoments einer Lenkwelle bekannt. Die Sensoreinrichtung umfasst einen Halter, der mit dem Wellenteil des Kraftfahrzeugs verbindbar ist, und einen am Halter angeordneten magnetisches Statorteil mit einem ringförmigen Basiselement,das eine Vielzahl von in axialer Richtung von dem ringförmigen Basiselement abstehenden, in Umfangsrichtung verteilt angeordneten Finger aufweist und über diese am Halter festgelegt ist.

Es ist Aufgabe der Erfindung, eine gegenüber dem Stand der Technik verbesserte Sensoreinrichtung der eingangs genannten Gattung sowie ein Verfahren zum Herstellen einer solchen Sensoreinrichtung vorzuschlagen.

Diese Aufgabe wird erfindungsgemäß durch eine Sensoreinrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Sensoreinrichtung dient zum Messen einer einen Rotationszustand eines Wellenteils eines Kraftfahrzeugs, insbesondere einer Lenkwelle des Kraftfahrzeugs, charakterisierenden Größe. Diese Größe ist bevorzugt ein Drehmoment und/oder ein Lenkwinkel. Die Sensoreinrichtung hat einen Halter, welcher mit dem Wellenteil des Kraftfahrzeugs verbindbar ist, sowie ein an dem Halter angeordnetes magnetisches Statorteil, welches zum Leiten von magnetischem Fluss von einem Magneten hin zu einem Magnetsensor (etwa über einen Flussleiter) ausgebildet ist. Das Statorteil ist bevorzugt aus einem weichmagnetischen Material gebildet. Das Statorteil weist ein sich in radialer Richtung erstreckendes, ringförmiges Basiselement sowie eine Vielzahl von in axialer Richtung von dem ringförmigen Basiselement abstehenden, in Umfangsrichtung verteilt angeordneten Zahnelementen auf. Zumindest in axialer Richtung ist das Statorteil über die Zahnelemente an dem Halter fixiert bzw. festgelegt.

Weil die Befestigung des Statorteils an dem Halter zumindest in axialer Richtung über die Zahnelemente erfolgt, kann einerseits eine besonders einfache Befestigung des magnetischen Statorteils an dem Halter ermöglicht und andererseits auch die ordnungsgemäße Funktionsweise des magnetischen Statorteils alleine gewährleistet werden. Das flanschartige Basiselement kann nämlich frei von Befestigungselementen ausgebildet sein, sodass ein Flussleiter (dieser leitet den magnetischen Fluss von dem Statorteil hin zu einem Magnetsensor) in einem minimalen axialen Abstand zu der axialen Stirnfläche des ringförmigen Basiselements des Statorteils angeordnet sein kann, ohne dass die Übertragung des magnetischen Flusses durch irgendwelche Befestigungsteile an dem Basiselement beeinträchtigt wird. Insbesondere ist jedoch ein wesentlicher Vorteil der Sensoreinrichtung darin zu sehen, dass neue Befestigungsarten des Statorteils an dem Halter ermöglicht werden, wie beispielsweise durch Biegen der freien axialen Enden der Zahnelemente oder dergleichen. Es kann somit erreicht werden, dass die Verbindung des Statorteils mit dem Halter auch ohne spezielle Verbindungstechniken erfolgt, wie beispielsweise ohne Laserschweißen oder dergleichen. Über die Zahnelemente lässt sich das Statorteil an dem Halter auch ohne zusätzliche Verbindungselemente befestigen, wie sie im Stand der Technik eingesetzt werden. So können alleine die Zahnelemente dazu genutzt werden, das Statorteil an dem Halter zu befestigen. Die Befestigung kann also ausschließlich über die Zahnelemente erfolgen.

Erfindungsgemäß ist vorgesehen, dass zumindest in axialer Richtung das Statorteil über jeweilige axiale freie Enden der Zahnelemente an dem Halter festgelegt ist. Dies bedeutet, dass die axiale Fixierung des Statorteils an dem Halter über die jeweiligen axialen, von dem ringförmigen Basiselement fernen Enden der Zahnelemente erfolgt. Über die axialen Enden der Zahnelemente kann das Statorteil besonders sicher und rutschfest an dem Halter montiert werden, nämlich beispielsweise indem die axialen Enden um einen axialen Randbereich des Halters umgebogen werden.

Darüber hinaus ist erfindungsgemäß vorgesehen, dass die axialen freien Enden der Zahnelemente umgebogen sind und einen axialen Randbereich des Halters zur axialen Fixierung des Statorteils hintergreifen. Die axialen Enden der Zahnelemente sind hier ium den axialen Randbereich des Halters umgebogen, sodass sie den axialen Randbereich zumindest bereichsweise umgreifen und somit eine sichere Befestigung des Statorteils zumindest in axialer Richtung gewährleisten. Die Verformung der Zahnelemente erfolgt somit in einem für die magnetische Funktion unwichtigen Bereich des Statorteils, sodass die Funktionsweise des Statorteils nicht beeinträchtigt wird. Des Weiteren sind somit keine speziellen und teuren Werkzeuge erforderlich, um das Statorteil an dem Halter zu fixieren, denn die axialen Enden der Zahnelemente brauchen lediglich um den axialen Randbereich des Halters umgebogen zu werden. Der sichere Sitz des Statorteils in axialer Richtung ist somit alleine durch diese umgebogenen axialen Ende der Zahnelemente gewährleistet, ohne dass weitere Befestigungselemente oder aber spezielle Schweißtechniken eingesetzt bzw. angewendet werden müssen. Die umgebogenen Zahnelemente dienen nämlich als Haken, welche den axialen Randbereich hintergreifen und somit ein Bewegen bzw. ein Rutschen des Statorteils in axialer Richtung relativ zum Halter verhindern.

Insbesondere kann vorgesehen sein, dass die axialen freien Enden der Zahnelemente durch eine jeweilige Lasche gebildet sind, die gegenüber dem restlichen Bereich des jeweiligen Zahnelements mit einer geringeren Breite in Umfangsrichtung ausgebildet ist. Dies bedeutet, dass diese Laschen, welche die freien Enden der Zahnelemente bilden, insgesamt eine geringere Breite als der restliche Bereich der Zahnelemente aufweisen. Somit wird einerseits ein leichtes Umbiegen der freien Enden bzw. der Laschen ermöglicht; andererseits ist auch weiterhin gewährleistet, dass die Zahnelemente ihre Funktion der Flussleitung ordnungsgemäß erfüllen können.

In einer Ausführungsform kann vorgesehen sein, dass auch in Umfangsrichtung das Statorteil über die axialen freien Enden der Zahnelemente an dem Halter fixiert bzw. festgelegt ist. Die freien Enden der Zahnelemente erfüllen somit insgesamt zwei Funktionen, nämlich einerseits die Funktion der axialen Fixierung und andererseits auch die Funktion der Fixierung des Statorteils in Umfangsrichtung. Dabei hat es sich als vorteilhaft erwiesen, wenn zur Fixierung des Statorteils in Umfangsrichtung die axialen freien Enden bzw. die oben genannten Laschen der Zahnelemente in korrespondierende axiale Aussparungen des Halters aufgenommen sind. Somit ist eine Bewegung des Statorteils in Umfangsrichtung relativ zum Halter besonders zuverlässig und sicher blockiert. Es ergibt sich nämlich auch ein Formschluss in Umfangsrichtung zwischen dem Statorteil einerseits und dem Halter andererseits.

Ein erfindungsgemäßes Kraftfahrzeug beinhaltet eine erfindungsgemäße Sensoreinrichtung.

Ein erfindungsgemäßes Verfahren dient zum Herstellen einer Sensoreinrichtung, durch welche eine einen Rotationszustand eines Wellenteils eines Kraftfahrzeugs, insbesondere einer Lenkwelle des Kraftfahrzeugs, charakterisierende Größe gemessen wird. Es wird ein Halter bereitgestellt, der mit dem Wellenteil des Kraftfahrzeugs verbunden werden kann. Es wird auch ein magnetisches Statorteil bereitgestellt zum Leiten von magnetischem Fluss, wobei das Statorteil mit einem sich in radialer Richtung erstreckenden, ringförmigen Basiselement und mit einer Vielzahl von in axialer Richtung von dem ringförmigen Basiselement abstehenden, in Umfangsrichtung verteilt angeordneten Zahnelementen ausgebildet wird. Das Statorteil wird an dem Halter festgelegt. Zumindest in axialer Richtung wird das Statorteil über die Zahnelemente an dem Halter festgelegt.

Die mit Bezug auf die erfindungsgemäße Sensoreinrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Dabei zeigen:
- Fig. 1: in schematischer und perspektivischer Darstellung eine Sensoreinrichtung gemäß einer Ausführungsform der Erfindung;
- Fig. 2: in schematischer und perspektivischer Darstellung ein axiales freies Ende eines Zahnelements eines Statorteils;
- Fig. 3: in schematischer und perspektivischer Darstellung eine erste Seite der Sensoreinrichtung in einem aufgebauten Zustand; und
- Fig. 4: in schematischer und perspektivischer Darstellung die andere Seite von der Sensoreinrichtung im zusammengefügten Zustand.

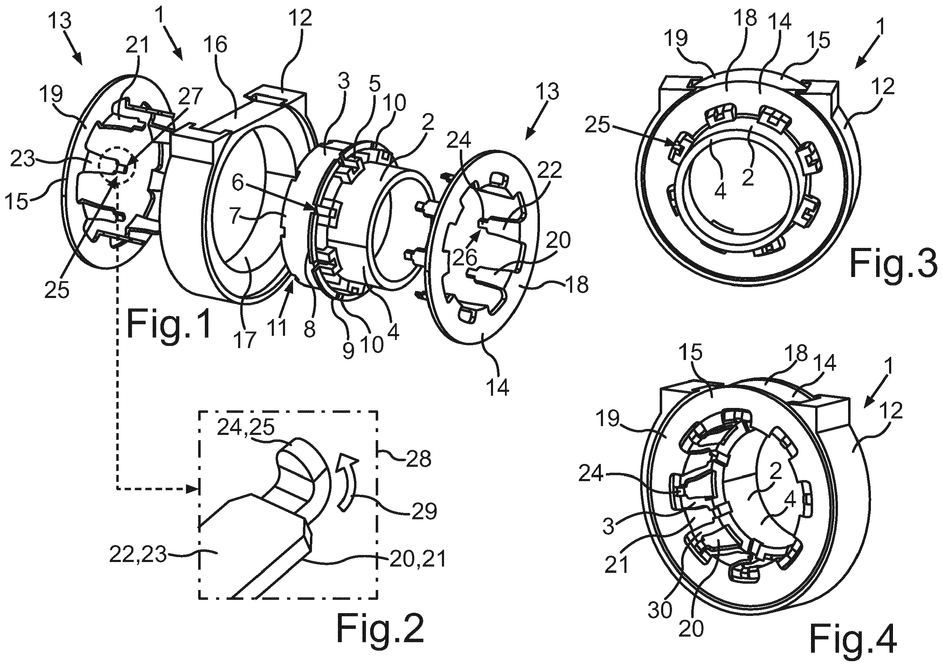

In Fig. 1 ist eine Sensoreinrichtung 1 bzw. Teilkomponenten einer gesamten Sensoreinrichtung dargestellt, welche zum Messen des Drehmoments und/oder des Lenkwinkels einer Lenkwelle eines Kraftfahrzeugs ausgebildet ist. Die Lenkwelle beinhaltet zwei Wellenteile, welche über einen Torsionsstab miteinander verbunden sind. An einem der Wellenteile ist ein Halter 2 drehfest angebracht, während an dem anderen Wellenteil ein in den Figuren nicht dargestellter Ringmagnet drehfest gehalten ist. Der Halter 2 kann ein einstückig ausgebildetes Kunststoffteil und/oder ein Gussbauteil sein. Optional kann der Halter 2 auch mit einer Metallhülse oder aber anderen Befestigungselementen wie Laschen, Haken, Clipsen und dergleichen versehen sein, um den Halter 2 an dem zugeordneten Wellenteil zu befestigen.

Der Halter 2 hat zwei axial nebeneinander angeordnete zylindrische Bereiche, nämlich einerseits einen ersten axialen zylindrischen Bereich 3 sowie einen in axialer Richtung versetzt angeordneten und einen etwas geringeren Durchmesser aufweisenden zweiten axialen Bereich 4. Der erste axiale Bereich 3 ist über eine Vielzahl von in Umfangsrichtung verteilt angeordneten Strebenpaaren 5 mit dem zweiten axialen Bereich 4 verbunden. Jedes Strebenpaar 5 besteht aus zwei nebeneinander angeordneten Streben, zwischen denen eine axiale Aussparung 6 ausgebildet ist. Diese Aussparung 6 stellt auch eine Durchgangsöffnung dar. Der Übersicht halber ist in Fig. 1 lediglich ein einziges Strebenpaar 5 sowie eine einzige Aussparung 6 mit den jeweiligen Bezugszeichen versehen.

Der erste axiale Bereich 3 des Halters 2 hat zwei axiale Randbereiche, nämlich einerseits einen ersten äußeren Randbereich 7 sowie andererseits einen zweiten axialen Randbereich 8. In dem zweiten axialen Randbereich 8 ist ein umlaufender Flansch 9 ausgebildet, der von dem ersten axialen Bereich 3 des Halters 2 in radialer Richtung ein wenig nach außen absteht. In dem Flansch 9 sind eine Vielzahl von radialen Aussparungen 10 ausgebildet, welche in denselben Winkelpositionen wie die Aussparungen 6 zwischen den Streben 5 ausgebildet sind. Somit sind die radialen Aussparungen 10 von dem Innenraum des zylindrischen und hohlen Halters 2 über die Aussparungen 6 zwischen den Streben 5 erreichbar.

Auch in dem ersten radialen Randbereich 7 sind eine Vielzahl von axialen Aussparungen 11 ausgebildet, welche als axiale Vertiefungen in dem äußeren Rand des ersten axialen Bereichs 3 des Halters 2 ausgeformt sind. Diese Aussparungen 11 sind in Umfangsrichtung versetzt zu den Aussparungen 10 angeordnet, sodass die Aussparungen 11 in Umfangsrichtung jeweils zwischen zwei benachbarten Aussparungen 10 angeordnet sind und umgekehrt.

Zur Sensoreinrichtung 1 gehört außerdem ein Gleitstück 12, wie auch ein Stator 13, welcher im Ausführungsbeispiel aus einem Statorteil 14 und einem zweiten Statorteil 15 besteht. Der Stator 13 ist aus einem weichmagnetischen Material gebildet und dient zum Leiten des magnetischen Flusses von dem genannten Magneten hin zu einem Flussleiter und hierdurch hin zu einem Magnetsensor, etwa einem Hall-Sensor. Der genannte Flussleiter wird an einer Abflachung 16 des Gleitstücks 12 angeordnet. Das Gleitstück 12 hat eine innere Hülse 17, in welche der erste axiale Bereich 3 des Halters 2 aufgenommen werden kann, sodass der äußere Umfang des ersten Bereichs 3 des Halters 2 an einem inneren Umfang der Hülse 17 gleiten kann.

Jedes Statorteil 14, 15 ist jeweils einstückig ausgebildet und weist ein ringförmiges, flanschartiges und sich in radialer Richtung erstreckendes Basiselement 18 bzw. 19 auf, wie auch eine Vielzahl von Zahnelementen 20 bzw. 21. Die Zahnelemente 20, 21 stehen von dem jeweiligen Basiselement 18 bzw. 19 in axialer Richtung ab, und zwar in Richtung zum Halter 2 hin. Die Zahnelemente 20, 21 erstrecken sich somit in axialer Richtung etwa parallel zu einer Drehachse des Wellenteils. Die beiden Statorteile 14, 15 sind dabei gleich ausgebildet, sodass auch die Anzahl der Zahnelemente 20 des Statorteils 14 gleich der Anzahl der Zahnelemente 21 des anderen Statorteils 15 ist.

Die Zahnelemente 20, 21 weisen jeweils einen Grundkörper 22 bzw. 23 sowie eine sich an den Grundkörper 22, 23 unmittelbar axial anschließende Lasche 24 bzw. 25 auf. Der Grundkörper 22 bzw. 23 steht unmittelbar von dem jeweiligen Basiselement 18 bzw. 19 axial ab und ist in Richtung von dem Basiselement 18 bzw. 19 weg ein wenig verjüngt ausgebildet. Die Lasche 24 bzw. 25 hat in Umfangsrichtung eine deutlich geringere Breite als der Grundkörper 22 bzw. 23, etwa eine halbe Breite. Die Lasche 24 bzw. 25 bildet auch ein axiales freies Ende 26 bzw. 27 des Zahnelements 20 bzw. 21. Die Lasche 24 bzw. 25 kann aufgrund der geringeren Breite relativ leicht in radialer Richtung nach außen umgebogen werden, um den Stator 13 an dem Halter 2 festzulegen.

Ein Endbereich 28 eines Zahnelements 20, 21 ist in Fig. 2 in einer vergrößerten Darstellung gezeigt. Hier ist der Grundkörper 22 bzw. 23 zusammen mit der Lasche 24 bzw. 25 dargestellt. Gemäß der Pfeildarstellung 29 kann diese Lasche 24 bzw. 25 radial umgebogen werden, wodurch der Stator 13 am Halter 2 befestigt werden kann.

Zur Befestigung des Stators 13 wird einerseits das Statorteil 14 mit seinen Zahnelementen 20 auf den zweiten axialen Bereich 4 des Halters 2 aufgesteckt, sodass die Zahnelemente 20 in korrespondierenden Öffnungen zwischen den Strebenpaaren 5 aufgenommen und an einem Innenumfang des ersten axialen Bereichs 3 des Halters 2 abgestützt werden. Der Abstand zwischen den Zahnelementen 20 in Umfangsrichtung entspricht dabei dem Winkelabstand zwischen den Aussparungen 11 an dem äußeren Randbereich 7 des Halters 2. Nach dem Aufstecken des Statorteils 14 auf den zweiten Bereich 4 des Halters 2 sind die Zahnelemente 20 im Inneren des ersten Bereichs 3 des Halters 2 angeordnet, sodass lediglich die Laschen 24 axial über den ersten Bereich 3 hinaus überstehen. Die Laschen 24 befinden sich dann in denselben Winkelpositionen wie die Aussparungen 11 und können somit durch Umbiegen gemäß der Pfeildarstellung 29 in diese korrespondierenden Aussparungen 11 aufgenommen werden. Die Laschen 24 werden um mindestens 90° umgebogen. Somit wird das erste Statorteil sowohl in axialer Richtung als auch in Umfangsrichtung fixiert bzw. an dem Halter 2 festgelegt. Dabei wird auch das Basiselement 18 in Anlage mit dem Flansch 9 des Randbereichs 8 gebracht, sodass dieser Flansch 9 einen axialen Anschlag beim Aufstecken des Statorteils 14 bildet.

Das andere Statorteil 15 wird an dem Halter 2 folgendermaßen befestigt: Die Zahnelemente 21 werden in das Innere des ersten Bereichs 3 des Halters 2 eingesteckt, nämlich derart, dass die Zahnelemente 21 an dem Innenumfang des zylindrischen Bereichs 3 gleiten. Die Laschen 25 gelangen dann in die Aussparungen 6 zwischen den Streben der jeweiligen Strebenpaare 5 und können durch Umbiegen gemäß der Pfeildarstellung 29 in die Aussparungen 10 in dem Flansch 9 aufgenommen werden. Die Laschen 25 werden um mindestens 90° umgebogen. Somit wird auch das zweite Statorteil 15 sowohl in axialer Richtung als auch in Umfangsrichtung fixiert. Das ringförmige Basiselement 19 des Statorteils 15 liegt dabei an dem Randbereich 7 des ersten zylindrischen Bereichs 3 des Halters 2 an.

Die beiden Statorteile 14, 15 sind dabei derart relativ zueinander angeordnet, dass die Zahnelemente 20 des Statorteils 14 zwischen den Zahnelementen 21 des Statorteils 15 angeordnet sind. Dies bedeutet, dass in Umfangsrichtung abwechselnd ein Zahnelement des Statorteils 14 und dann ein Zahnelement 21 des Statorteils 15 angeordnet sind.

In den Fig. 3 und 4 ist die Sensoreinrichtung 1 in einem zusammengefügten Zustand dargestellt. Fig. 3 zeigt dabei eine Frontseite der Sensoreinrichtung 1, auf welcher sich auch der zweite axiale Bereich 4 des Halters 2 befindet. Die Rückseite der Sensoreinrichtung 1 ist in Fig. 4 dargestellt. Wie insbesondere aus Fig. 4 hervorgeht, können an dem Innenumfang des ersten axialen Bereichs 3 des Halters 2 eine Vielzahl von axialen Rippen 30 vorgesehen sein, zwischen welchen die Zahnelemente 20, 21 eingeschoben sind. Zwischen diesen Rippen 30 können also mit den Zahnelementen 20, 21 korrespondierende Taschen bzw. radiale Vertiefungen ausgebildet sein, in welche die beiderseitigen Zahnelemente 20 bzw. 21 aufgenommen bzw. eingeschoben werden können. Durch eine solche Ausgestaltung des Innenumfangs des Halters 2 kann eine zusätzliche Verdrehsicherung erreicht werden.

## Patentansprüche

1. Sensoreinrichtung (1) zum Messen einer einen Rotationszustand eines Wellenteils eines Kraftfahrzeugs, insbesondere einer Lenkwelle des Kraftfahrzeugs, charakterisierenden Größe, mit einem Halter (2), der mit dem Wellenteil des Kraftfahrzeugs verbindbar ist, und mit einem am Halter (2) angeordneten magnetischen Statorteil (14, 15), welches zum Leiten von magnetischem Fluss von einem Magneten hin zu einem Magnetsensor ausgebildet ist, wobei das Statorteil (14, 15) ein sich in radialer Richtung erstreckendes, ringförmiges Basiselement (18, 19) und eine Vielzahl von in axialer Richtung von dem ringförmigen Basiselement (18, 19) abstehenden, in Umfangsrichtung verteilt angeordneten Zahnelementen (20, 21) aufweist, wobei zumindest in axialer Richtung das Statorteil (14, 15) über die Zahnelemente (20, 21) an dem Halter (2) festgelegt ist **dadurch gekennzeichnet, dass**
in axialer Richtung das Statorteil (14, 15) über jeweilige axiale freie Enden (26, 27) der Zahnelemente (20, 21) an dem Halter (2) festgelegt ist, wobei die axialen freien Enden (26, 27) der Zahnelemente (20, 21) umgebogen sind und einen axialen Randbereich (7, 8) des Halters (2) zur axialen Fixierung des Statorteils (14, 15) an dem Halter (2) hintergreifen.

2. Sensoreinrichtung (1) nach Anspruch 1,
**dadurch gekennzeichnet, dass**
die axialen freien Enden (26, 27) der Zahnelemente (20, 21) durch jeweilige Lasche (24, 25) gebildet sind, welche gegenüber dem restlichen Bereich (22, 23) des Zahnelements (20, 21) mit einer geringeren Breite in Umfangsrichtung ausgebildet ist.

3. Sensoreinrichtung (1) nach einem der Ansprüche 1 bis 2,
**dadurch gekennzeichnet, dass**
auch in Umfangsrichtung das Statorteil (14, 15) über die axialen freien Enden (26, 27) der Zahnelemente (20, 21) an dem Halter (2) festgelegt ist.

4. Sensoreinrichtung (1) nach Anspruch 3,
**dadurch gekennzeichnet, dass**
zur Fixierung des Statorteils (14, 15) in Umfangsrichtung die axialen freien Enden (26, 27) der Zahnelemente (20, 21) in korrespondierende axiale Aussparungen (10, 11) des Halters (2) aufgenommen sind.

5. Kraftfahrzeug mit einer Sensoreinrichtung (1) nach einem der vorhergehenden Ansprüche.

6. Verfahren zum Herstellen einer Sensoreinrichtung (1), durch welche eine einen Rotationszustand eines Wellenteils eines Kraftfahrzeugs, insbesondere einer Lenkwelle des Kraftfahrzeugs, charakterisierende Größe gemessen wird, mit den Schritten:
- Bereitstellen eines Halters (2), der mit dem Wellenteil des Kraftfahrzeugs verbindbar ist,
- Bereitstellen eines magnetischen Statorteils (14, 15) zum Leiten von magnetischem Fluss, wobei das Statorteil (14, 15) mit einem sich in radialer Richtung erstreckenden, ringförmigen Basiselement (18, 19) und mit einer Vielzahl von in axialer Richtung von dem ringförmigen Basiselement (18, 19) abstehenden, in Umfangsrichtung verteilt angeordneten Zahnelementen (20, 21) ausgebildet wird, und
- Festlegen des Statorteils (14, 15) an dem Halter (2), wobei zumindest in axialer Richtung das Statorteil (14, 15) über die Zahnelemente (20, 21) an dem Halter (2) festgelegt wird
**dadurch gekennzeichnet, dass**
in axialer Richtung das Statorteil (14, 15) über jeweilige axiale freie Enden (26, 27) der Zahnelemente (20, 21) an dem Halter (2) festgelegt wird. wobei zur axialen Fixierung des Statorteils (14, 15) an dem Halter (2) die axialen freien Enden (26, 27) der Zahnelemente (20, 21) umgebogen werden, so dass sie einen axialen Randbereich (7, 8) des Halters (2) hintergreifen

7. Verfahren nach Anspruch 6,
**dadurch gekennzeichnet, dass**
die axialen freien Enden (26, 27) der Zahnelemente (20, 21) durch jeweilige Lasche (24, 25) gebildet werden, welche gegenüber dem restlichen Bereich (22, 23) des Zahnelements (20, 21) mit einer geringeren Breite in Umfangsrichtung ausgebildet wird.

8. Verfahren nach einem der Ansprüche 6 bis 7,
**dadurch gekennzeichnet, dass**
auch in Umfangsrichtung das Statorteil (14, 15) über die axialen freien Enden (26, 27) der Zahnelemente (20, 21) an dem Halter (2) fixiert wird.

9. Verfahren nach Anspruch 8,
**dadurch gekennzeichnet, dass**
zur Fixierung des Statorteils (14, 15) in Umfangsrichtung die axialen freien Enden (26, 27) der Zahnelemente (20, 21) in korrespondierende axiale Aussparungen (10, 11) des Halters (2) aufgenommen werden.

## Claims

1. Sensor device (1) for measuring a variable characterizing a rotational state of a shaft part of a motor vehicle, in particular of a steering shaft of the motor vehicle, having a mount (2) which can be connected to the shaft part of the motor vehicle, and having a magnetic stator part (14, 15) which is arranged on the mount (2) and is designed to direct magnetic flux from a magnet to a magnet sensor, wherein the stator part (14, 15) has an annular base element (18, 19) which extends in the radial direction, and a multiplicity of tooth elements (20, 21) which protrude from the annular base element (18, 19) in the axial direction and are arranged distributed in the circumferential direction, wherein, at least in the axial direction the stator part (14, 15) is secured to the mount (2) via the tooth elements (20, 21),
**characterized in that**
in the axial direction the stator part (14, 15) is secured to the mount (2) via respective axial free ends (26, 27) of the tooth elements (20, 21), wherein the axial free ends (26, 27) of the tooth elements (20, 21) are bent over and engage an axial edge region (7, 8) of the mount (2) in order to axially attach the stator part (14, 15) to the mount (2).

2. Sensor device (1) according to Claim 1,
**characterized in that**
the axial free ends (26, 27) of the tooth elements (20, 21) are formed by respective clips (24, 25) which are embodied with a smaller width in the circumferential direction than the remaining region (22, 23) of the tooth element (20, 21).

3. Sensor device (1) according to one of Claims 1 to 2,
**characterized in that**
the stator part (14, 15) is also secured to the mount (2) in the circumferential direction via the axial free ends (26, 27) of the tooth elements (20, 21).

4. Sensor device (1) according to Claim 3,
**characterized in that**
in order to attach the stator part (14, 15) in the circumferential direction, the axial free ends (26, 27) of the tooth elements (20, 21) are received in corresponding axial cutouts (10, 11) of the mount (2).

5. Motor vehicle having a sensor device (1) according to one of the preceding claims.

6. Method for manufacturing a sensor device (1), by means of which a variable characterizing a rotational state of a shaft part of a motor vehicle, in particular of a steering shaft of the motor vehicle, is measured, having the steps:
- making available a mount (2) which can be connected to the shaft part of the motor vehicle,
- making available a magnetic stator part (14, 15) for directing magnetic flux, wherein the stator part (14, 15) is embodied with an annular base element (18, 19) which extends in the radial direction, and with a multiplicity of tooth elements (20, 21) which protrude from the annular base element (18, 19) in the axial direction and are arranged distributed in the circumferential direction, and
- securing the stator part (14, 15) to the mount (2), wherein, at least in the axial direction, the stator part (14, 15) is secured to the mount (2) via the tooth elements (20, 21),
**characterized in that**
in the axial direction the stator part (14, 15) is secured to the mount (2) via respective axial free ends (26, 27) of the tooth elements (20, 21), wherein in order to axially attach the stator part (14, 15) to the mount (2), the axial free ends (26, 27) of the tooth elements (20, 21) are bent over, with the result that they engage behind an axial edge region (7, 8) of the mount (2).

7. Method according to Claim 6,
**characterized in that**
the axial free ends (26, 27) of the tooth elements (20, 21) are formed by respective clips (24, 25) which are embodied with a smaller width in the circumferential direction than the remaining region (22, 23) of the tooth element (20, 21).

8. Method according to one of Claims 6 to 7,
**characterized in that**
the stator part (14, 15) is also attached to the mount (2) in the circumferential direction via the axial free ends (26, 27) of the tooth elements (20, 21).

9. Method according to Claim 8,
**characterized in that**
in order to attach the stator part (14, 15) in the circumferential direction, the axial free ends (26, 27) of the tooth elements (20, 21) are received in corresponding axial cutouts (10, 11) of the mount (2).

## Revendications

1. Dispositif de détection (1) permettant de mesurer une grandeur caractéristique d'un état de rotation d'un élément formant arbre d'un véhicule automobile, en particulier d'un arbre de direction d'un véhicule automobile, ledit dispositif comprenant un support (2) qui peut être relié à l'élément formant arbre du véhicule automobile, et un élément formant stator magnétique (14, 15) disposé sur le support (2) et configuré pour diriger le flux magnétique d'un aimant vers un capteur magnétique, dans lequel l'élément formant stator (14, 15) comporte un élément de base annulaire (18, 19) s'étendant en direction radiale et une pluralité d'éléments formant dents (20, 21) répartis dans la direction circonférentielle et dépassant en direction radiale de l'élément de base annulaire (18, 19), dans lequel l'élément formant stator (14, 15) est fixé au support (2) par les éléments formant dents (20, 21) au moins dans une direction axiale,
**caractérisé en ce que** l'élément formant stator (14, 15) est fixé au support (2) en direction axiale par l'intermédiaire d'extrémités axiales libres (26, 27) respectives des éléments formant dents (20, 21), dans lequel les extrémités axiales libres (26, 27) des éléments formant dents (20, 21) sont recourbées et s'engagent par l'arrière sur une zone périphérique axiale (7, 8) du support (2) pour fixer axialement l'élément formant stator (14, 15) au support (2).

2. Dispositif de détection (1) selon la revendication 1,
**caractérisé en ce que** les extrémités axiales libres (26, 27) des éléments formant dents (20, 21) sont formées par des pattes (24, 25) respectives qui sont configurées de manière à présenter une faible largeur dans la direction circonférentielle par rapport à la zone restante (22, 23) des éléments formant dents (20, 21).

3. Dispositif de détection (1) selon l'une des revendications 1 et 2,
**caractérisé en ce que** l'élément formant stator (14, 15) est également fixé au support (2) par l'intermédiaire des extrémités axiales libres (26, 27) des éléments formant dents (20, 21).

4. Dispositif de détection (1) selon la revendication 3,
**caractérisé en ce que** les extrémités axiales libres (26, 27) des éléments formant dents (20, 21) sont reçues dans des évidements axiaux correspondants (10, 11) du support (2) pour fixer l'élément formant stator (14, 15) dans la direction circonférentielle.

5. Véhicule automobile comportant un dispositif de détection (1) selon l'une quelconque des revendications précédentes.

6. Procédé de fabrication d'un dispositif de détection (1), permettant de mesurer une grandeur
caractéristique d'un état de rotation d'un élément formant arbre d'un véhicule automobile, en particulier d'un arbre de direction d'un véhicule automobile, comprenant les étapes consistant à :
- prévoir un support (2) qui peut être relié à l'élément formant arbre du véhicule automobile,
- prévoir un élément formant stator magnétique (14, 15) destiné à diriger un flux magnétique, dans lequel l'élément formant stator (14, 15) comporte un élément de base annulaire (18, 19) s'étendant en direction radiale et une pluralité d'éléments formant dents (20, 21) répartis dans la direction circonférentielle et dépassant en direction radiale de l'élément de base annulaire (18, 19), et
- fixer l'élément formant stator (14, 15) au support (2), dans lequel l'élément formant stator (14, 15) est fixé au support (2) par les éléments formant dents (20, 21) au moins dans une direction axiale,
**caractérisé en ce que** l'élément formant stator (14, 15) est fixé au support (2) en direction axiale par l'intermédiaire d'extrémités axiales libres (26, 27) respectives des éléments formant dents (20, 21), dans lequel les extrémités axiales libres (26, 27) des éléments formant dents (20, 21) sont recourbées de manière à ce qu'elles s'engagent par l'arrière sur une zone périphérique axiale (7, 8) du support (2) pour fixer axialement l'élément formant stator (14, 15) au support (2).

7. Procédé selon la revendication 6,
**caractérisé en ce que** les extrémités axiales libres (26, 27) des éléments formant dents (20, 21) sont formées par des pattes (24, 25) respectives qui sont configurées de manière à présenter une faible largeur dans la direction circonférentielle par rapport à la zone restante (22, 23) de l'élément formant dent (20, 21).

8. Procédé selon l'une quelconque des revendications 6 à 7,
**caractérisé en ce que** l'élément formant stator (14, 15) est également fixé au support (2) par l'intermédiaire des extrémités axiales libres (26, 27) des éléments formant dents (20, 21).

9. Procédé selon la revendication 8,
**caractérisé en ce que** les extrémités axiales libres (26, 27) des éléments formant dents (20, 21) sont reçues dans des évidements axiaux correspondants (10, 11) du support (2) pour fixer l'élément formant stator (14, 15) dans la direction circonférentielle.
